# DEMANDE DE BREVET EUROPEEN

(11) **EP 1 493 606 A1**
(43) Date de publication de la demande: **05.01.2005**
(21) Numéro de dépôt: 04291635.3
(22) Date de dépôt: 29.06.2004
(51) Int. Cl.: B60K 31/18, B60K 26/02

(54) **Procédé et système d'assistance au controle de la vitesse d'un véhicule automobile, et support d'enregistrement d'informations pour la mise en oeuvre du procédé**

(30) Priorité: 03.07.2003 FR 0308125
(71) Demandeur: Peugeot Citroen Automobiles S.A., 78140 Vélizy Villacoublay (FR)
(72) Inventeur: Gaully, Bruno, 92300 Levallois Perret (FR); Guillemin, Fabrice, 92100 Boulogne Billancourt (FR)
(74) Mandataire: Jacobson, Claude

(57) **Abrégé**

Ce procédé d'assistance au contrôle de la vitesse s'applique à un véhicule automobile équipé d'un actionneur commandable, apte à exercer une force de rappel sur un organe de réglage de la vitesse du véhicule. Lorsque plusieurs signaux d'activation de l'actionneur sont simultanément générés par différents dispositifs électroniques, le procédé comporte :
- une étape (104) de sélection d'un nombre restreint de procédures de commande de l'actionneur parmi l'ensemble des procédures de commande associées aux signaux d'activation générés, et
- une étape (108 à 112) de commande de l'actionneur en exécutant uniquement ce nombre restreint de procédures de commande sélectionnées.

## Description

L'invention concerne un procédé et un système d'assistance au contrôle de la vitesse d'un véhicule, et un support d'enregistrement d'informations pour la mise en oeuvre du procédé.

Plus précisément, l'invention concerne des véhicules automobiles équipés :
- d'un organe de réglage de la vitesse du véhicule automobile actionnable directement par le conducteur,
- d'un actionneur commandable, apte à exercer une force de rappel sur ledit organe, et
- de plusieurs dispositifs électroniques aptes chacun à générer, indépendamment des autres, un signal d'activation de sa propre procédure de commande de l'actionneur, chaque procédure de commande déterminant une force de rappel que l'actionneur doit exercer sur l'organe pour inciter le conducteur à ralentir.

Ces procédés d'assistance visent à aider le conducteur à maintenir une vitesse constante et appropriée aux conditions de déplacement du véhicule. Un tel procédé est, par exemple, décrit dans EP 0 617 674 B1. Dans ce document, une unité électronique reçoit différents signaux d'activation de procédures de commande de l'actionneur. Dans le mode de réalisation décrit, l'unité électronique reçoit des signaux de contrôle de vitesse, de sécurité et de glissement. Ensuite, les procédures de commande associées à chacun des signaux d'activation reçus sont exécutées par un sélecteur de maximum, de manière à déterminer laquelle de ces procédures de commande fixe la force de rappel la plus grande. L'actionneur est alors commandé pour exercer sur l'organe de réglage cette force de rappel la plus grande, à moins qu'un autre signal reçu par l'unité électronique ne force temporairement l'actionneur à exercer une force de rappel basse.

Ce système fonctionne correctement tant que le nombre de procédures de commande reste faible. Toutefois, si le nombre de procédures de commande s'accroît, il devient alors difficile d'exécuter chacune d'elles dans un laps de temps raisonnable pour déterminer celle qui implique la force de rappel la plus grande.

L'invention vise à pallier cet inconvénient, en proposant un procédé d'assistance au contrôle de la vitesse d'un véhicule apte à déterminer plus rapidement la force de rappel à exercer sur un organe de réglage de la vitesse.

L'invention a donc pour objet un procédé d'assistance tel que décrit ci-dessus, caractérisé en ce que, lorsque plusieurs signaux d'activation sont simultanément générés par différents dispositifs électroniques, le procédé comporte :
- une étape de sélection d'un nombre restreint de procédures de commande parmi l'ensemble des procédures de commande associées aux signaux d'activation générés,
- une étape de commande de l'actionneur en exécutant uniquement ce nombre restreint de procédures de commande sélectionnées.

Dans le procédé ci-dessus, avant d'exécuter des procédures de commandes, seul un nombre restreint des procédures de commande possibles est sélectionné et, ensuite, seules les procédures de commande sélectionnées sont exécutées, de manière à déterminer la force de rappel que l'actionneur doit exercer. Ainsi, contrairement au procédé de EP 0 617 674 B1, toutes les procédures de commande possibles ne sont pas systématiquement exécutées. Dès lors, le procédé revendiqué s'avère plus rapide que le procédé de EP 0 617 674 B1.

Suivant d'autres caractéristiques, le procédé conforme à l'invention se caractérise en ce que :
- chaque signal d'activation est associé à un niveau de priorité, et en ce que l'étape de sélection consiste à sélectionner la ou les procédures de commande associées aux signaux d'activation générés les plus prioritaires ;
- l'étape de sélection consiste à ne sélectionner qu'une seule procédure de commande parmi l'ensemble des procédures de commande associées aux signaux d'activation générés ;
- au moins une des procédures de commande comporte également, en plus d'une opération de commande de l'actionneur au moins une opération de commande d'une interface homme/machine, pour informer le conducteur de la nécessité de ralentir ;
- au moins une procédure de commande comporte une opération de détermination de la force de rappel à exercer en fonction de l'écart entre une vitesse maximale préconisée et la vitesse réelle du véhicule automobile ;
- il comporte une étape de sélection entre un mode manuel dans lequel la vitesse maximale préconisée est sélectionnée manuellement par le conducteur, et au moins un mode automatique dans lequel la vitesse maximale préconisée est automatiquement déterminée à partir d'informations sur les conditions de fonctionnement du moteur et/ou de déplacement du véhicule automobile.

L'invention a également pour objet un support d'enregistrement d'informations, caractérisé en ce qu'il comporte des instructions pour l'exécution d'un procédé conforme à l'invention, lorsque ces instructions sont exécutées par un calculateur électronique.

L'invention a également pour objet un système d'assistance au contrôle de la vitesse d'un véhicule automobile, le système comportant :
- un organe de réglage de la vitesse du véhicule automobile actionnable directement par le conducteur,
- un actionneur commandable, apte à exercer une force de rappel sur ledit organe, et
- plusieurs dispositifs électroniques, aptes chacun à générer, indépendamment des autres, un signal d'activation de sa propre procédure de commande de l'actionneur, chaque procédure de commande déterminant une force de rappel que l'actionneur doit exercer sur l'organe pour inciter le conducteur à ralentir,
caractérisé en ce qu'il comporte un calculateur électronique, qui, lorsque plusieurs signaux d'activation sont simultanément générés par les différentes dispositifs électroniques, est apte à :
- sélectionner un nombre restreint de procédures de commande parmi l'ensemble des procédures de commande associées aux signaux d'activation générés, et
- commander l'actionneur en exécutant uniquement ce nombre restreint de procédures de commande sélectionnées.
   Suivant d'autres caractéristiques, le système conforme à l'invention se caractérise en ce que,
- au moins une procédure de commande comporte des instructions pour déterminer la valeur de la force de rappel à exercer, en fonction de l'écart entre une vitesse maximale préconisée et la vitesse réelle du véhicule automobile ;
- il comporte un dispositif de sélection actionnable directement par le conducteur, ce dispositif étant apte à générer un signal de sélection d'un mode de fonctionnement du système, et le calculateur est apte, en fonction de ce signal à activer soit un mode de fonctionnement manuel dans lequel la vitesse maximale préconisée est manuellement fixée par le conducteur soit un mode de fonctionnement automatique, dans lequel la vitesse maximale préconisée est déterminée automatiquement en fonction d'informations sur les conditions de fonctionnement du moteur et/ou de déplacement du véhicule automobile.
- le dispositif de sélection comporte : au moins un basculeur déplaçable en rotation par le conducteur, autour d'un premier axe de rotation entre au moins deux positions, et un détecteur de la position de ce basculeur, apte à transmettre au calculateur électronique un signal de sélection du mode de fonctionnement, fonction de la position détectée ;
- le dispositif de sélection comporte une molette déplaçable en rotation par le conducteur, autour d'un second axe de rotation entre, au moins, une première et une seconde position, et un détecteur de la position de cette molette, apte à transmettre au calculateur électronique un signal de position de la molette, et le calculateur est apte, à partir de ce signal de position, à choisir la vitesse maximale préconisée parmi un jeu de valeurs préenregistrées correspondant chacune à une position de la molette ;
- le second axe de rotation est solidaire du basculeur ;
- les premier et second axes de rotation sont confondus ;
- le dispositif de sélection est un commodo.

L'invention sera mieux comprise à la lecture de la description qui va suivre, donnée uniquement à titre d'exemple, et faite en se référant aux dessins sur lesquels :
- la figure 1 est une illustration schématique de l'architecture d'un système d'assistance au contrôle de la vitesse d'un véhicule conforme à l'invention,
- les figure 2A et 2B sont des illustrations schématiques de chacune des faces d'un dispositif de sélection d'un mode de fonctionnement du système de la figure 1, et
- la figure 3 est un organigramme d'un procédé d'assistance au contrôle de la vitesse d'un véhicule conforme à l'invention.

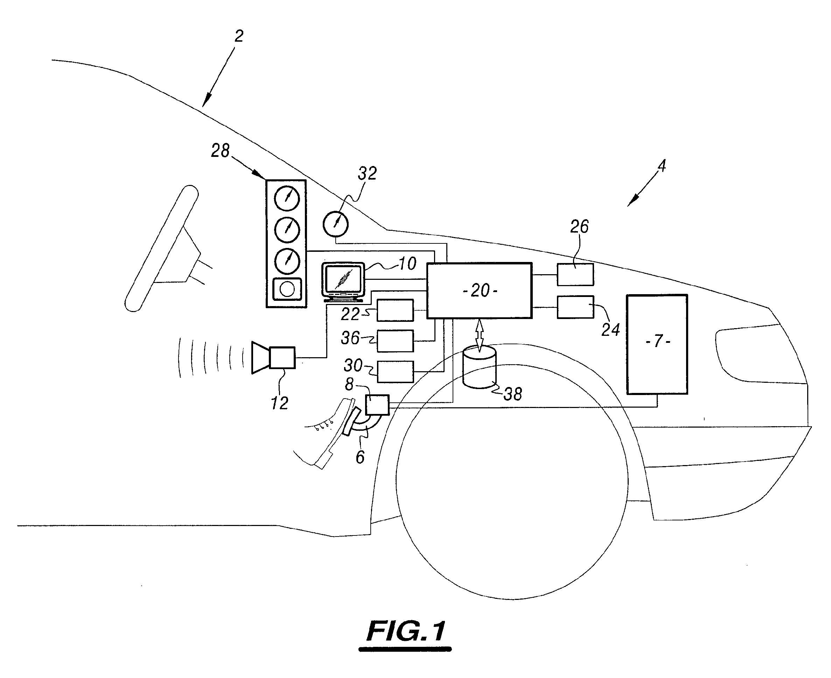

La figure 1 représente un véhicule 2 équipé d'un système d'assistance au contrôle de sa vitesse. Le système est désigné par la référence générale 4.

Le système 4 comporte un organe de réglage de la vitesse du véhicule automobile actionnable directement par le conducteur. Cet organe de réglage est ici une pédale d'accélération 6, déplaçable par le pied du conducteur de façon continue entre une position de repos et une position d'enfoncement maximale. La position de cette pédale 6 détermine la puissance délivrée par le moteur 7 de traction du véhicule 2, et, par conséquent, son accélération, ainsi que sa vitesse. Dans la position de repos, aucune accélération du véhicule n'est sollicitée, tandis que dans la position d'enfoncement maximale, l'accélération maximale du véhicule est sollicitée.

Le système 4 comporte un actionneur commandable, propre à exercer une force de rappel sur la pédale 6 pour la déplacer vers sa position de repos.

La pédale 6, associée à l'actionneur forme une interface homme/machine haptique, propre à inciter le conducteur à ralentir lorsque la force de rappel exercée augmente.

Le système 4 comporte ici, à titre d'exemple, d'autres interfaces homme/machine, tels qu'un écran 10 et un haut-parleur 12.

Ces interfaces homme/machine sont raccordées à un calculateur électronique 20 apte à exécuter des procédures de commande de ces différentes interfaces en fonction de différents signaux d'activation reçus.

Chaque signal d'activation reçu est destiné à activer l'exécution par le calculateur 20 de la procédure de commande spécifique qui lui est associée.

Dans le système 4, ces signaux d'activation sont générés par des dispositifs électroniques indépendants les uns des autres, embarqués dans le véhicule 2.

A titre d'exemple, les signaux d'activation sont ici générés par un système de navigation GPS *(Global Positioning System)* 22 et par différents systèmes de sécurité, dont est équipé le véhicule 2.

Le système de navigation GPS 22 est conventionnel, et permet d'afficher la position du véhicule et la direction à suivre. Ce système 22 est ici raccordé au calculateur 20, de manière à pouvoir lui communiquer à chaque instant des informations sur les conditions de circulation. Ces informations comportent, notamment, la vitesse limite applicable sur le tronçon de route sur lequel se déplace le véhicule, ainsi que d'autres informations, tels que la présence de travaux, d'embouteillages, le relief, ou encore les conditions météorologiques actuelles.

Le véhicule 2 est ici équipé des systèmes de sécurité suivants :
- un système conventionnel 24 de stabilisation de trajectoire, connu sous le terme de système ESP *(Electronic Stability Program)* propre à délivrer au calculateur 20 un signal d'activation contenant des informations sur la vitesse, l'accélération et le régime du moteur,
- un régulateur conventionnel 26 de vitesse et d'espacement vis-à-vis de l'obstacle le plus proche, connu sous le terme de "régulateur ACC" *(Adaptive Cruise Control)* propre à délivrer au calculateur 20 un signal d'activation comportant des informations sur la distance séparant le véhicule 2 de l'obstacle le plus proche, et sur la vitesse relative du véhicule 2 vis-à-vis de cet obstacle, et
- un limitateur électronique conventionnel 28 du régime du moteur 7 propre à délivrer au calculateur 20 un signal d'activation contenant des informations sur la température du moteur, le niveau de carburant, le taux de dioxyde de carbone émis et l'activation par le conducteur d'un mode de consommation économique.

Le calculateur 20 est également raccordé à d'autres dispositifs électroniques, tels que, par exemple, ici, une boîte de vitesse manuelle pilotée, conventionnelle 30 et un capteur de vitesses 32.

La boîte de vitesses 30 est apte à ouvrir automatiquement l'embrayage du véhicule 2 lors d'un changement de vitesse. Le signal d'activation délivré par cette boîte de vitesses 30 est destiné à éviter que le conducteur n'accélère durant la phase d'embrayage/débrayage automatique.

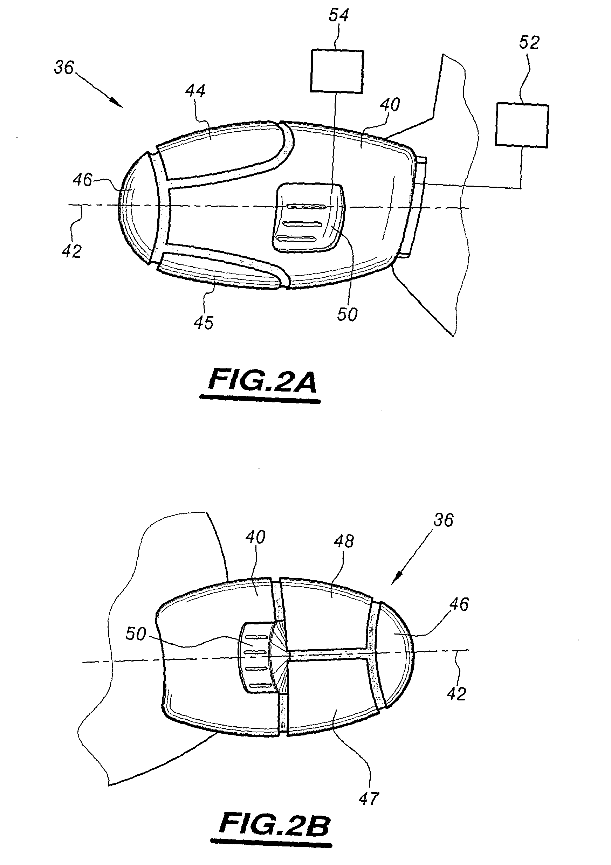

Finalement, le système 4 comporte un dispositif 36 de sélection par le conducteur des modes de fonctionnement du calculateur 20. Ce dispositif 36 sera décrit de manière plus exhaustive en regard des figures 2A et 2B.

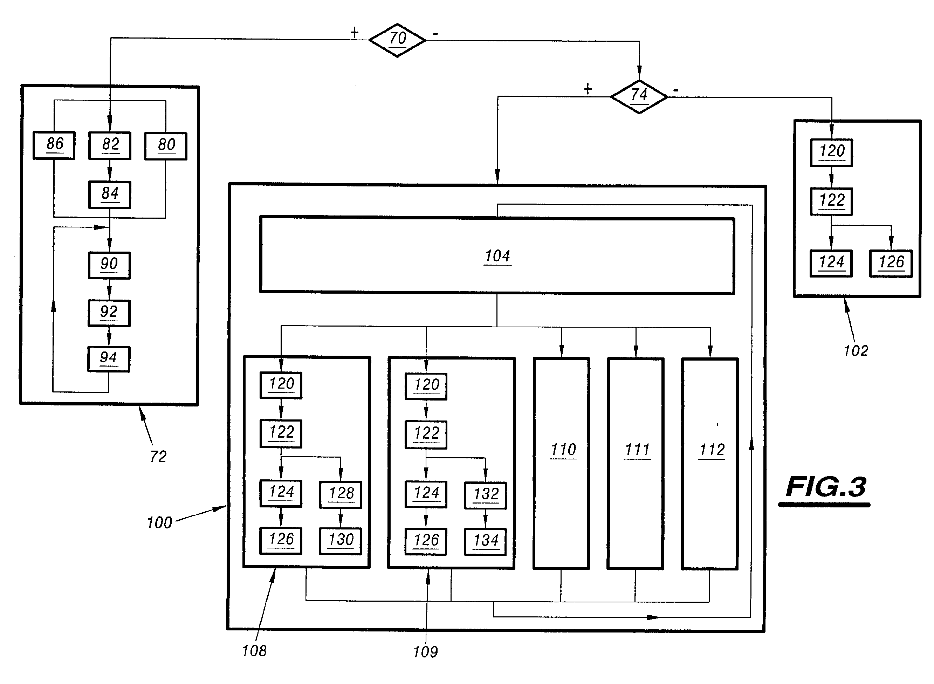

Le calculateur 20 est un calculateur électronique programmable, conventionnel, propre à exécuter des instructions, enregistrées sur un support d'enregistrement d'informations. A cet effet, il est associé à une mémoire 38 comportant des instructions pour l'exécution du procédé de la figure 3 lorsqu'elles sont exécutées par le calculateur 20.

La mémoire 38 contient toutes les informations nécessaires à la mise en oeuvre du procédé de la figure 3 et en particulier :
- des valeurs de vitesse limite préenregistrées ;
- une procédure de commande de l'actionneur 8 pour chaque signal d'activation susceptible d'être transmis par l'un des dispositifs électroniques 22 à 30 ;
- au moins une relation entre un écart de vitesse et la valeur d'une consigne de commande de l'actionneur 8, et
- des niveaux de priorité associés à chacun des signaux d'activation.

Le dispositif de sélection 36 des figures 2A et 2B est un commodo placé à proximité du volant du véhicule 2, de manière à pouvoir être actionné manuellement par le conducteur sans lâcher le volant.

Les figures 2A et 2B représentent respectivement les faces avant et arrière de ce commode, la face avant étant la face présentée au conducteur.

Ce commodo 36 est formé d'une partie centrale oblongue 40, formant un basculeur, apte à pivoter entre deux positions avant/arrière autour d'un axe de rotation horizontal 42. La partie centrale est raccordée par son extrémité droite à la structure du véhicule.

Cette partie centrale sert de support à cinq boutons : 44 à 48, et à une molette 50.

Le bouton 44 d'initialisation du réglage du calculateur 20 et le bouton 45 de réinitialisation du réglage du calculateur 20 sont respectivement disposés sur la surface supérieure et sur la surface inférieure de la partie centrale 40.

Le bouton 46 de marche/arrêt est placé sur l'extrémité libre de la partie 40.

Les boutons d'incrémentation et de décrémentation 47 et 48 sont, quant à eux, placés sur la face arrière, respectivement en-dessous et au-dessus de l'axe 42.

La molette 50 est disposée au centre de la partie centrale 40 dans une cavité aménagée à cet effet. Cette molette est apte à se déplacer en rotation autour de l'axe 42 entre trois positions M1, M2 et M3, correspondant chacune à une vitesse limite préenregistrée dans la mémoire 38.

Le commode 36 comporte également un détecteur 52 de la position de la partie centrale et un détecteur 54 de la position de la molette 50. Ces détecteurs 52 et 54 sont raccordés au calculateur 20.

Le fonctionnement du système 4 va maintenant être décrit en regard de la figure 3.

Au cours d'une phase de conduite, le conducteur sélectionne, lors d'une étape 70, soit le mode de fonctionnement manuel, en basculant la partie centrale 40 vers l'arrière, soit le mode de fonctionnement automatique, en basculant la partie centrale 40 vers l'avant.

Le calculateur 20 reçoit cette information par l'intermédiaire du détecteur 52 et procède alors, soit à une phase 72 de réglage manuel d'une vitesse limite, soit à une étape de choix 74 entre deux modes de fonctionnement automatique.

Lors de la phase 72, le conducteur détermine lui-même la vitesse limite qu'il souhaite appliquer au véhicule 2.

A cet effet, il procède par exemple à une étape 80 de sélection d'une vitesse limite préenregistrée en plaçant la molette 50 dans la position M1, M2 ou M3 correspondant à la vitesse limite qu'il souhaite maintenir.

Le conducteur a également la possibilité de fixer lui-même la valeur de la vitesse limite à maintenir. A cet effet, il augmente ou décrémente, lors d'une étape 82, la vitesse limite actuellement mémorisée à l'aide des boutons 47 et 48. Une fois que la valeur de la vitesse limite qu'il souhaite maintenir est atteinte, il enfonce, lors d'une étape 84, le bouton 44, de façon à mémoriser la valeur de la vitesse limite qu'il a réglée lors de l'étape 82.

Le conducteur dispose aussi de la possibilité, dans le mode manuel, d'enfoncer le bouton 45, lors d'une étape 86, pour effacer la ou les valeurs de vitesse limite qu'il a lui-même réglées, lors de l'étape 82, et revenir automatiquement aux valeurs préenregistrées.

Une fois qu'une valeur de vitesse limite a été manuellement sélectionnée par le conducteur, le calculateur procède à une étape 90 de détermination automatique de l'écart entre la vitesse limite réglée par le conducteur, et la vitesse réelle du véhicule mesurée, par exemple, par le capteur 32. Ensuite, le calculateur détermine automatiquement, lors d'une étape 92, une consigne de commande de l'actionneur 8, en fonction de l'écart établi lors de l'étape 90. Pour ce faire, par exemple, le calculateur 20 utilise une relation préenregistrée entre un écart de vitesse et la consigne de commande correspondante. Cette relation préenregistrée est établie, de manière à ce que plus la vitesse réelle du véhicule est supérieure à la vitesse limite choisie, plus la force de rappel exercée par l'actionneur 8 sur la pédale 6 est importante. En effet, l'augmentation de la force de rappel incite le conducteur à lever le pied et donc à ralentir.

Une fois la consigne de commande de l'actionneur 8 déterminée, le calculateur transmet celle-ci, lors d'une étape 94, à l'actionneur 8, qui agit en conséquence.

A l'issue de l'étape 94, le calculateur retourne à l'étape 90, tant que le conducteur reste en mode de fonctionnement manuel.

Lors de l'étape 74, le conducteur déplace la molette 50, de manière à sélectionner, soit un réglage automatique, soit un mode de régulation de la vitesse du véhicule entièrement automatique. Dans le premier cas, le calculateur procède à une phase 100 de réglage automatique, tandis que dans le second cas, le calculateur procède à une phase 102 de régulation automatique de la vitesse.

Lors de la phase 100, le calculateur 20 sélectionne tout d'abord, lors d'une étape 104, une seule procédure de commande de l'actionneur 8. A cet effet, il sélectionne, par exemple, uniquement la procédure de commande associée au signal d'activation reçu le plus prioritaire lorsque plusieurs signaux d'activation sont simultanément transmis par les dispositifs 22 à 30.

Ici, les signaux les plus prioritaires sont dans l'ordre de priorité décroissante, ceux générés par le système ESP 24, le régulateur ACC 26, la boîte de vitesses 30, le dispositif 28, et le système de navigation 22.

Ensuite, il exécute uniquement la procédure de commande sélectionnée lors de l'étape 104.

Ici, les procédures de commande associées aux dispositifs électroniques 22 à 30 sont représentées par des étapes en parallèle 108 à 112, dont une seule est exécutée à la fois. Ici, les étapes 108 à 112 sont classées par ordre décroissant de priorité de l'étape 108 à l'étape 112.

Lors de chacune de ces étapes, 108 à 112, la vitesse limite préconisée pour le véhicule est déterminée automatiquement en fonction des informations contenues dans le signal d'activation correspondant.

Par exemple, lors de l'étape 108, le calculateur procède à une opération 120 de détermination de la vitesse limite en fonction des informations contenues dans le signal d'activation transmis par le système ESP 24.

Ensuite, lors de cette étape 108, le calculateur 20 procède à une opération 122 de détermination de l'écart entre la vitesse limite déterminée lors de l'étape 120 et la vitesse réelle du véhicule, puis à une étape 124 de détermination de la consigne de commande à appliquer à l'actionneur 8 lors d'une étape suivante 126.

Les opérations 122, 124 et 126 sont, par exemple, similaires aux étapes 90, 92 et 94.

ici, à titre d'exemple, en parallèle à l'opération 122, le calculateur réalise également une opération 128 de détermination automatique du message sonore à émettre par l'intermédiaire du haut-parleur 12, en fonction de l'écart déterminé lors de l'opération 122.

Après cette opération 128, le calculateur 20 commande le haut-parleur 12, lors d'une opération 130, pour diffuser ce message sonore.

L'étape 109 est identique à l'étape 108, à l'exception du fait que les opérations 128 et 130, sont, par exemple, remplacées par des opérations 132 et 134, respectivement de détermination d'un message d'avertissement à afficher en cas d'écart excessif entre la vitesse limite et la vitesse réelle, et de commande de l'écran 10 pour afficher ce message.

Les étapes 110 à 112 sont similaires aux étapes 108 et 109 et ne seront pas décrites ici en détail.

Une fois que le calculateur 20 a exécuté l'une des étapes 108 à 112, il retourne à l'étape 104.

Ainsi, tant que le calculateur 20 est dans le mode de fonctionnement automatique, avec réglage automatique de la vitesse limite, seule la vitesse limite correspondant au signal d'activation le plus prioritaire est déterminée automatiquement, puis utilisée pour commander l'actionneur 8. Il est à noter que la consigne de commande appliquée n'est pas nécessairement la valeur la plus haute parmi l'ensemble des consignes de commande qui auraient pu être déterminées si toutes les procédures de commande avaient été exécutées.

Lors de la phase 102, le calculateur procède à une étape 120 similaire à l'étape 104, lors de laquelle il sélectionne une seule procédure de commande de l'actionneur 8.

Ensuite, il exécute, lors d'une étape 122, la procédure de commande sélectionnée afin de déterminer automatiquement la vitesse limite préconisée. Cette étape 122 est, par exemple, similaire à l'opération 120 décrite précédemment.

Une fois la vitesse limite déterminée, le calculateur commande automatiquement, lors d'une étape 124 le moteur du véhicule 2 pour maintenir la vitesse du véhicule égale à la vitesse limite déterminée lors de l'étape 122. Lors de cette étape 124, le calculateur met, par exemple, en oeuvre des procédés de régulation classiques.

Parallèlement à l'étape 124, le calculateur commande également, lors d'une étape 126, l'actionneur 8 pour maintenir la position de la pédale 6 constante. Des procédés pour maintenir la position d'une pédale 6 constante, étant connus, cette étape 126 ne sera pas décrite ici plus en détail.

Ainsi, lors de la phase 102, la pédale 6 est uniquement utilisée comme repose-pieds pour le conducteur, tandis que la régulation de la vitesse du véhicule est réalisée automatiquement par le calculateur 20.

Le conducteur sort de la phase 102, soit, par exemple, en actionnant une pédale de frein, soit en appuyant brusquement sur la pédale 6.

## Revendications

1. Procédé d'assistance au contrôle de la vitesse d'un véhicule automobile équipé :
- d'un organe (6) de réglage de la vitesse du véhicule automobile actionnable directement par le conducteur,
- d'un actionneur (8) commandable, apte à exercer une force de rappel sur ledit organe (6), et
- de plusieurs dispositifs électroniques (22 à 28), aptes chacun à générer, indépendamment des autres, un signal d'activation de sa propre procédure de commande de l'actionneur (8), chaque procédure de commande déterminant une force de rappel que l'actionneur (8) doit exercer sur l'organe (6) pour inciter le conducteur à ralentir, - d'un organe (6) de réglage de la vitesse du véhicule automobile actionnable directement par le conducteur,
**caractérisé en ce que**, lorsque plusieurs signaux d'activation sont simultanément générés par différents dispositifs électroniques, le procédé comporte :
- une étape (104) de sélection d'un nombre restreint de procédures de commande parmi l'ensemble des procédures de commande associées aux signaux d'activation générés,
- une étape (108 à 112) de commande de l'actionneur en exécutant uniquement ce nombre restreint de procédures de commande sélectionnées.

2. Procédé selon la revendication 1, **caractérisé en ce que** chaque signal d'activation est associé à un niveau de priorité, et **en ce que** l'étape (104) de sélection consiste à sélectionner la ou les procédures de commande associées aux signaux d'activation générés les plus prioritaires.

3. Procédé selon l'une quelconque des revendications précédentes, **caractérisé en ce que** l'étape (104) de sélection consiste à ne sélectionner qu'une seule procédure de commande parmi l'ensemble des procédures de commande associées aux signaux d'activation générés.

4. Procédé selon l'une des quelconques revendications précédentes, **caractérisé en ce que** au moins une des procédures de commande comporte également, en plus d'une opération (126) de commande de l'actionneur (8) au moins une opération (130) de commande d'une interface homme/machine, pour informer le conducteur de la nécessité de ralentir.

5. Procédé selon l'une quelconque des revendications précédentes, **caractérisé en ce que** au moins une procédure de commande comporte une opération (120) de détermination de la force de rappel à exercer en fonction de l'écart entre une vitesse maximale préconisée et la vitesse réelle du véhicule automobile.

6. Procédé selon la revendication 5, **caractérisé en ce qu'**il comporte une étape (70) de sélection entre un mode manuel dans lequel la vitesse maximale préconisée est sélectionnée manuellement par le conducteur, et au moins un mode automatique dans lequel la vitesse maximale préconisée est automatiquement déterminée à partir d'informations sur les conditions de fonctionnement du moteur et/ou de déplacement du véhicule automobile.

7. Support d'enregistrement d'informations, **caractérisé en ce qu'**il comporte des instructions pour l'exécution d'un procédé conforme à l'une quelconque des revendications 1 à 6, lorsque ces instructions sont exécutées par un calculateur électronique.

8. Système d'assistance au contrôle de la vitesse d'un véhicule automobile, le système comportant :
- un organe (6) de réglage de la vitesse du véhicule automobile actionnable directement par le conducteur,
- un actionneur (8) commandable, apte à exercer une force de rappel sur ledit organe (6), et
- plusieurs dispositifs électroniques (22 à 28), aptes chacun à générer, indépendamment des autres, un signal d'activation de sa propre procédure de commande de l'actionneur (8), chaque procédure de commande déterminant une force de rappel que l'actionneur (8) doit exercer sur l'organe (6) pour inciter le conducteur à ralentir,
**caractérisé en ce qu'**il comporte un calculateur électronique (20), qui, lorsque plusieurs signaux d'activation sont simultanément générés par les différentes dispositifs électroniques, est apte à :
- sélectionner un nombre restreint de procédures de commande parmi l'ensemble des procédures de commande associées aux signaux d'activation générés, et
- commander l'actionneur (8) en exécutant uniquement ce nombre restreint de procédures de commande sélectionnées.

9. Système selon la revendication 8, **caractérisé en ce que** au moins une procédure de commande comporte des instructions pour déterminer la valeur de la force de rappel à exercer, en fonction de l'écart entre une vitesse maximale préconisée et la vitesse réelle du véhicule automobile.

10. Système selon la revendication 9, **caractérisé :**
- **en ce qu'**il comporte un dispositif de sélection (36) actionnable directement par le conducteur, ce dispositif étant apte à générer un signal de sélection d'un mode de fonctionnement du système, et
- **en ce que** le calculateur (20) est apte, en fonction de ce signal à activer soit un mode de fonctionnement manuel dans lequel la vitesse maximale préconisée est manuellement fixée par le conducteur soit un mode de fonctionnement automatique, dans lequel la vitesse maximale préconisée est déterminée automatiquement en fonction d'informations sur les conditions de fonctionnement du moteur et/ou de déplacement du véhicule automobile.

11. Système selon la revendication 10, **caractérisé en ce que** le dispositif de sélection (36) comporte :
- au moins un basculeur (40) déplaçable en rotation par le conducteur, autour d'un premier axe de rotation (42) entre au moins deux positions, et
- un détecteur de la position de ce basculeur (40), apte à transmettre au calculateur électronique (20) un signal de sélection du mode de fonctionnement, fonction de la position détectée.

12. Système selon la revendication 11, **caractérisé en ce que** le dispositif de sélection (36) comporte une molette (50) déplaçable en rotation par le conducteur, autour d'un second axe de rotation (42) entre, au moins, une première et une seconde position, et un détecteur (54) de la position de cette molette (50), apte à transmettre au calculateur électronique (20) un signal de position de la molette, et **en ce que** le calculateur (20) est apte, à partir de ce signal de position, à choisir la vitesse maximale préconisée parmi un jeu de valeurs préenregistrées correspondant chacune à une position de la molette (50).

13. Système selon la revendication 12, **caractérisé en ce que** le second axe de rotation (42) est solidaire du basculeur (40).

14. Système selon la revendication 12 ou 13, **caractérisé en ce que** les premier et second axes de rotation (42) sont confondus.

15. Système selon l'une quelconque des revendications 12 à 14, **caractérisé en ce que** le dispositif de sélection (36) est un commodo.
